Europäisches Patentamt

European Patent Office

Office européen des brevets

(19)

(11) Publication number: **0 206 569**
**B1**

# EUROPEAN PATENT SPECIFICATION

(12)

(45) Date of publication of the patent specification:
**11.10.89**

(51) Int. Cl.⁴: **G11B 27/34**, G11B 33/10
// G11B27/10, G11B5/008,
H04N5/92, G11B20/10

(21) Application number: **86304185.1**

(22) Date of filing: **02.06.86**

(54) **Display apparatus for multi-channel PCM recorder.**

(30) Priority: **13.06.85 JP 89271/85**

(43) Date of publication of application:
**30.12.86 Bulletin 86/52**

(45) Publication of the grant of the patent:
**11.10.89 Bulletin 89/41**

(84) Designated Contracting States:
**AT DE FR GB NL**

(56) References cited:
**EP-A- 0 081 958**
**EP-A- 0 085 578**
**CA-A- 893 359**
**US-A- 2 550 007**
**US-A- 3 279 799**
**US-A- 3 588 375**
**US-A- 3 647 986**
**US-A- 4 130 842**
**US-A- 4 325 080**

**PATENT ABSTRACTS OF JAPAN, vol. 6,
no. 27 (P-102)[905], 17th February 1982; &
JP-A-56 145 579 (TEAC K.K.) 12-11-1981**

(73) Proprietor: **SONY CORPORATION,
7-35 Kitashinagawa 6-Chome Shinagawa-ku,
Tokyo 141(JP)**

(72) Inventor: **Oguro, Masaki c/o Patents Div. Sony
Corporation, 6-7-35 Kitashinagawa, Shinagawa-ku
Tokyo 141(JP)**
Inventor: **Kawakami, Hajime c/o Patents Div. Sony
Corporatio, 6-7-35 Kitashinagawa, Shinagawa-ku
Tokyo 141(JP)**
Inventor: **Motohashi, Shunji c/o Patents Div. Sony
Corporatio, 6-7-35 Kitashinagawa, Shinagawa-ku
Tokyo 141(JP)**
Inventor: **Fukushima, Shinichi c/o Patents Div. Sony
Corporat, 6-7-35 Kitashinagawa, Shinagawa-ku
Tokyo 141(JP)**
Inventor: **Nagamune, Masahiro c/o Patents Div. Sony
Corporat, 6-7-35 Kitashinagawa, Shinagawa-ku
Tokyo 141(JP)**

(74) Representative: **Thomas, Christopher Hugo et al, D
Young & Co 10 Staple Inn, London WC1V 7RD(GB)**

ACTORUM AG

## Description

This invention relates to a display apparatus for a multi-channel PCM (pulse code modulation) recorder. More particularly, but not exclusively, the invention relates to helical-scan-type magnetic tape recording and/or reproducing apparatus which can function as a video tape recorder (VTR) or as an audio tape recorder utilizing a common magnetic tape.

Our US patent 4 542 419, which issued on 17 September 1985, discloses a helical-scan-type magnetic tape recording and/or reproducing apparatus which can operate either as a VTR or as an audio tape recorder, such as a PCM audio signal recorder. In this type of recording and/or reproducing apparatus, a magnetic tape is wrapped around a rotary head drum at an angle relative to the magnetic head path, so as to define video and audio recording areas on the tape. In the normal video recording mode, the recording and/or reproducing apparatus records or reproduces a PCM audio signal on the audio recording area, the PCM audio signal being recorded using time-base compression.

On the other hand, in the audio recording mode, the recording and/or reproducing apparatus uses not only the audio recording area but also the video recording area for PCM audio signal recording. In this case, the video recording area is divided into a plurality of segments, each of which corresponds to the audio recording area, and records time-base-compressed PCM audio signals in substantially the same format as they are recorded in the audio recording area.

With this arrangement, a plurality of PCM audio signal recording channels are formed on the magnetic tape. In a normal VTR, each recording track is divided into the video recording area and the audio recording area respectively covering 180° and 36° of rotary head drum rotation. When the recording and/or reproducing apparatus is operating in PCM audio recording mode, the video recording area is divided into five segments, each corresponding to 36° of rotary head drum rotation. The segments on the track form a sequence of channels for PCM audio recording. Therefore, in the aforementioned example, six channels are formed on the magnetic tape. Normally, a single channel is used for one cycle of PCM audio signal recording. Therefore, six cycles of PCM audio recording can be recorded on a single magnetic tape.

On tapes on which some PCM audio recording has been recorded, the channel available for the next audio recording (blank channel) must be selected for the next cycle of PCM audio recording by the recording and/or reproducing apparatus. On the other hand, when the recorded PCM audio signal is to be reproduced, the channel corresponding to the desired programme must be selected.

A difficulty is encountered in prior proposed systems in selecting the channel for the next cycle of audio signal recording, since there is no way to distinguish between pre-recorded channels and unused channels except by reproducing each channel. This is not at all convenient for utilizing the recording and/or reproducing apparatus in the audio recording mode.

Our European patent specification EP-A 20 085 578 discloses a multi-channel PCM recorder for recording a plurality of audio channels in oblique tracks on a magnetic tape, and of the kind to which the present invention is applied. US patent specification US-A 3 588 375 discloses a multitrack tape recorder having display lamps for indicating the levels of the signals recorded in respective tracks.

According to the present invention there is provided a display apparatus for a multi-channel helical scan PCM recorder wherein a plurality of audio channels are recorded in respective segments into which each of oblique tracks on a magnetic tape are divided, the apparatus being characterised by:

a display device having a set of display elements, each element corresponding to a respective channel;

a pilot signal reproducing circuit for reproducing a pilot signal which has been superimposed on PCM data when said data were recorded on said magnetic tape;

a logic circuit supplied with said reproduced pilot signal and a magnetic head switching signal which logic circuit determines the segments being momentarily reproduced by comparing the timing of occurrences of the pilot signal and the head switching signal and which generates in dependence thereon indication signals indicating whether data are recorded in the channel to which said segment being reproduced corresponds; and a drive circuit for supplying said indication signals to said set of display elements for indicating pre-recorded channels.

The invention will now be described by way of example with reference to the accompanying drawings, throughout which like parts are referred to by like references, and in which:

Figure 1 is a block diagram of an embodiment of display apparatus in a recording and/or reproducing apparatus and according to the invention, in which are illustrated only those components necessary for PCM audio recording;

Figures 2A and 2B diagrams of the format of the magnetic tape tracks in video recording mode and audio recording mode respectively;

Figure 3 is an illustration of an indicator in the embodiment; and

Figure 4 is a detailed block diagram of indicator control circuitry in the embodiment.

General techniques and circuitry for selectively performing normal VTR operations and PCM audio recording operations have been disclosed in our above-mentioned US patent 4 542 419, the contents of which are hereby incorporated by reference.

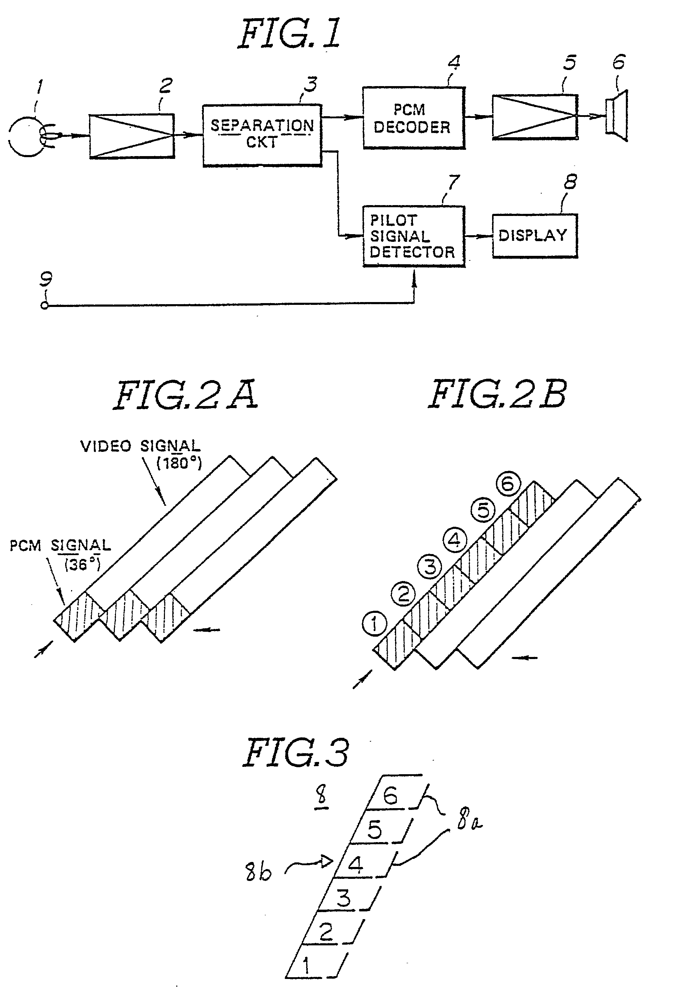

Referring first to Figures 1 and 2, a rotary magnetic head 1 of the embodiment of recording and/or reproducing apparatus picks up video and/or audio signals recorded on the tracks on a magnetic tape, for example, a VTR tape. As is well known, the PCM audio signal is superimposed on a pilot signal with a fixed frequency, for example, of 228.748 kHz. The PCM audio signal picked up by the magnetic head 1 is amplified by an amplifier 2 and supplied to a separation circuit 3. The separation circuit 3 separates the amplified signal into a PCM signal component and a pilot signal component.

The PCM audio signal output from the separation circuit 3 is fed to a PCM decoder 4 which demodulates the PCM audio signal. Although not shown in detail, the demodulated digital signal is converted into analog signals to be reproduced through an amplifier 5 and a loudspeaker 6.

On the other hand, the pilot signal component supplied by the separation circuit 3 is fed to a pilot signal detector 7. The pilot signal detector 7 also receives a RF-SW signal through a terminal 9. Based on the RF-SW signal, the pilot signal detector 7 recognizes which channel corresponds to the reproduced PCM audio signal. The pilot signal detector 7 supplies a driver signal to a display 8.

As particularly shown in Figure 3, the display 8 has a plurality of indicator segments 8a, each of which corresponds to one channel on the magnetic tape. Each indicator segment 8a is designed to be energised and hence illuminated by the driver signal produced by the pilot signal detector 7 in response to the pilot signal of the corresponding channel. Therefore, each indicator segment 8a is turned on in response to the pilot signal reproduced from the corresponding track on the magnetic tape.

Figures 2 and 3 illustrate the relationship between the display 8 employed in the embodiment and the track format of the magnetic tape. As set forth above, since the normal VTR tape has six channels when used for PCM audio recording, the display 8 is composed of six display sections, each corresponding to one of the channels. The sections labelled "1" to "6" correspond to the first to sixth channels respectively on the magnetic tape. The indicator segments 8a are arranged in corresponding sections of the display 8.

As will be seen from Figure 2, each indicator segment 8a is an Ô-shaped light emitting diode (LED) segment which turns on in response to the driver signal from the pilot signal detector 7. Therefore, in the condition shown in Figure 2B, all six channels are already pre-recorded.

The display 8 may also include a selected position indicator 8b. In the embodiment shown, the selected position indicator 8b is a triangular LED segment pointing towards the channel being reproduced. In Figure 3, the selected position indicator 8b indicates the fourth channel.

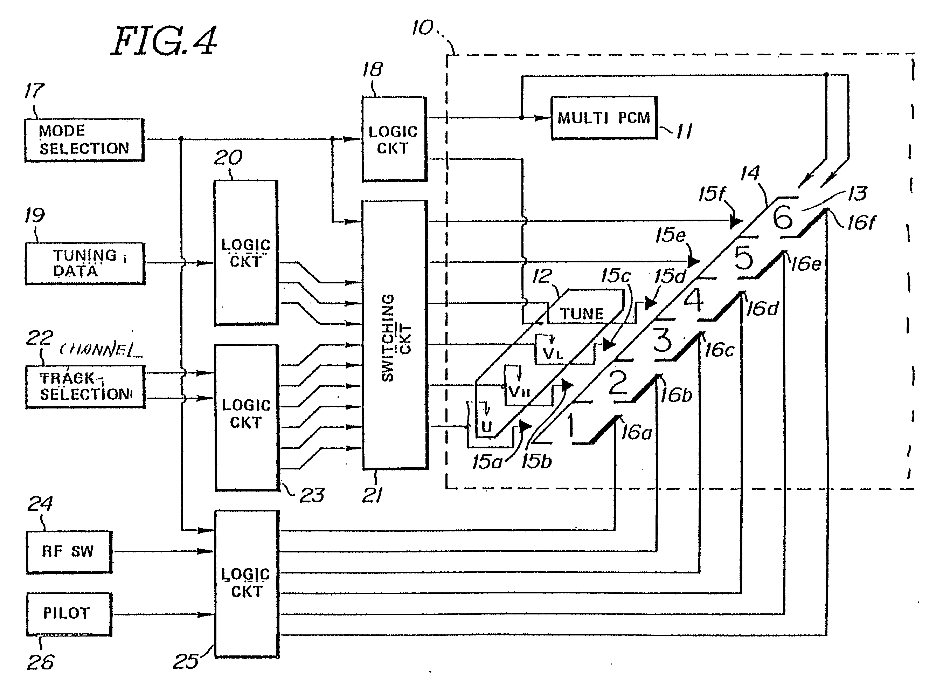

The embodiment of channel indication display circuit for the recording and/or reproducing apparatus, and according to the present invention will be described in greater detail below with reference to Figure 4. In this embodiment, the channel indicator display circuit uses the same circuit elements as a tuner display circuit.

In the embodiment, a part of a multi-purpose display 10 is mounted on a front panel (not shown) of a VTR housing. The multi-purpose display 10 has mode display sections 11 and 12. The mode display sections 11 and 12 are connected to a logic circuit 18 which controls them according to a mode selection signal from a mode selection terminal 17. The logic circuit 18 decodes the mode selection signal from the mode selection terminal 17.

In practice, the mode selection terminal 17 allows selection of either multi-PCM (multi-channel PCM) mode or tuning mode. When the multiPCM mode is selected, PCM audio recording and/or reproduction is performed. On the other hand, when the tuning mode is selected, television channel tuning in normal VTR operation is performed. The mode display section 11 is turned on when the multi-PCM mode is selected, and the mode display section 12 is turned on when the tuning mode is selected.

In the multi-PCM mode, all numerical indications 13 and frame segments 14 turn on at the same time when the mode display section 11 is turned on.

The multi-purpose display 10 is also provided with triangular selected position indicator segments 15a to 15f and Ô-shaped channel indicator segments 16a to 16f. The selected position indicator segments 15a to 15f are arranged opposite respective corresponding numerical indicators 13. Also, the channel indicator segments 16a to 16f are arranged opposite respective corresponding numerical indicators 13 on the side opposite to the selected position indicator segments 15a to 15f.

In the tuning mode, tuning data from a tuning data input terminal 19 is supplied to a logic circuit 20. The logic circuit 20 derives an output representing a selected television channel band. Specifically, the tuning data contains selected channel data indicating one of the low VHF band, the high VHF band or the UHF band. Therefore, the mode display section 12 includes indicator segments $V_L$, $V_H$ and U respectively corresponding to the low VHF band, the high VHF band and ther UHF band. One of these indicator segments turns on in response to the tuning data input from the tuning data input terminal 19.

A switching circuit 21 is provided between the logic circuit 20 and the selected position indicator segments 15a to 15f. The switching circuit 21 also receives the output of a logic circuit 23 which receives channel selection data through a channel selection data input terminal 22. The logic circuit 23 supplies a switching signal which is derived on the basis of the channel selection data from the channel selection data input terminal 22. The switching signal of the logic circuit 23 is supplied to the switching circuit 21, which selectively turns on one of the selected position indicator segments 15a to 15f corresponding to the selected channel.

In addition, there is provided another logic circuit 25. The logic circuit 25 receives a RF-SW pulse through a terminal 24. The logic circuit 25 also receives the pilot signal through a terminal 26. The output terminals of the logic circuit 25 are connected to the channel indicator segments 16a to 16f. The logic circuit 25 also receives the mode selection data from the mode selection terminal 17. When the mode selection data indicates that the tuning mode has been selected, the logic circuit 25 is disabled.

In the multi-PCM mode, the logic circuit 25 is active to compare the timing of occurrences of the pilot signal with the RF-SW pulses. The timing of occurrences of the pilot signal indicates to the logic circuit 25 which channels have been pre-recorded. Each time the pilot signal is detected, the logic circuit 25 supplies a drive signal to the channel indicator segment 16a to 16f corresponding to the current channel, so as to turn on that channel indicator segment 16a to 16f.

Thus, the embodiment can provide a visual indication of pre-recorded tracks by detecting the pilot signal superimposed on PCM audio data. This allows the user to find channels available for recording, without having to reproduce acoustic sounds. This also prevents the user from erroneously erasing recorded data by overwriting it with the new PCM audio data. Moreover, when no acoustic sound is being generated during playback, the user can check whether the silence is due to an empty channel or to the muting interval between recorded programmes. In addition, the user can quickly locate a desired song or programme utilizing the picture search function of the VTR.

## Claims

1. A display apparatus for a multi-channel helical scan PCM recorder wherein a plurality of audio channels are recorded in respective segments into which each of oblique tracks on a magnetic tape are divided, the apparatus being characterised by:
a display device (10) having a set of display elements (16a to 16f), each element (16a to 16f) corresponding to a respective channel;
a pilot signal reproducing circuit (26) for reproducing a pilot signal which has been superimposed on PCM data when said data were recorded on said magnetic tape;
a logic circuit (25) supplied with said reproduced pilot signal and a magnetic head switching signal by comparing the timing of occurences of the pilot signal and the head switching signal which logic circuit determines the segment being momentarily reproduced, and which generates in dependence theron indication signals indicating whether data are recorded in the channel to which said segment being reproduced corresponds; and a drive circuit for supplying said indication signals to said set of display elements (16a to 16f) for indicating pre-recaded channels.

2. A display apparatus according to claim 1 wherein said display device (10) includes a second set of display segments (15a to 15f) each second segment (15a to 15f) corresponding to one of said channels, said second segments (15a to 15f) being provided for indicating which of said channels is currently selected for recording and reproduction.

3. A display apparatus according to claim 2 wherein said second set of display segments (15a to 15f) is controlled by a second logic circuit (23) which receives a signal indicating which of said channels is currently selected.

4. A display apparatus according to claim 3 which further comprises a third logic circuit (20) which receives tuning information in a video-receiving mode of the recorder and drives a selected one of a set of display segments (15a to 15f) to indicate the tuning state.

## Patentansprüche

1. Anzeigegerät für einen mehrkanaligen PCM-Rekorder mit Schrägspurabtastung, bei dem mehrere Tonkanäle jeweils in Segmenten aufgezeichnet werden, in die die einzelnen Schrägspuren auf einem Magnetband unterteilt sind, gekennzeichnet durch eine Anzeigevorrichtung (10) mit einem Satz von Anzeigeelementen (16a bis 16f), die jeweils einem der Tonkanäle zugeordnet sind, eine Pilotsignal-Wiedergabeschaltung (26) zur Reproduzierung eines Pilotsignals, das bei der Aufzeichnung von PCM-Daten auf dem Magnetband diesen Daten überlagert wurde, eine Logikschaltung (25), der das reproduzierte Pilotsignal und ein Magnetkopf-Umschaltsignal (RF-SW) zugeführt werden und die durch Vergleich der Zeiten, in denen das Pilotsignal und das Magnetkopf-Umschaltsignal auftreten, das im jeweiligen Zeitpunkt wiedergegebene Segment bestimmt und in Abhängigkeit hiervon Anzeigesignale erzeugt, die anzeigen, ob Daten in demjenigen Kanal aufgezeichnet werden, dem das in diesem Zeitpunkt wiedergegebene Segment entspricht, und eine Treiberschaltung zur Zuführung der Anzeigesignale an den Satz von Anzeigeelementen (16a bis 16f) für die Anzeige der zuvor aufgelesenen Kanäle.

2. Anzeigegerät nach Anspruch 1, bei dem die Anzeigevorrichtung (10) einen zweiten Satz von Anzeigesegmenten (15a bis 15f) enthält, die jeweils einem der Tonkanäle entsprechen und dazu dienen, anzuzeigen, welcher dieser Tonkanäle im jeweiligen Zeitpunkt zur Aufnahme und Wiedergabe ausgewählt ist.

3. Anzeigegerät nach Anspruch 2, bei dem der zweite Satz von Anzeigesegmenten (15a bis 15f) durch eine zweite Logikschaltung (23) gesteuert wird, die ein Signal empfängt, das anzeigt, welcher der Tonkanäle im jeweiligen Zeitpunkt ausgewählt ist.

4. Anzeigegerät nach Anspruch 3 mit einer dritten Logikschaltung (20), die im Fernsehempfangsbetrieb des Rekorders eine Abstimminformation empfängt und ein ausgewähltes Exemplar aus einem Satz von Anzeigesegmenten (15a bis 15f) ansteuert, um den Abstimmzustand anzuzeigen.

## Revendications

1. Appareil d'affichage pour un enregistreur à modulation par impulsions codées MIC à balayage hélicoïdal à multiples canaux dans lequel un ensemble de canaux sonores sont enregistrés dans des segments respectifs en lesquels sont divisées chacune des pistes obliques sur une bande magnétique, l'appareil étant caractérisé par:
– un dispositif d'affichage (10) comportant un groupe d'éléments d'affichage (16a à 16f), chaque élément (16a à 16f) correspondant à un canal respectif;
– un circuit de reproduction de signal pilote (26) pour reproduire un signal pilote qui a été superposé aux données MIC quand les données ont été enregistrées sur la bande magnétique:
– un circuit logique (25) recevant le signal pilote reproduit et un signal de changement de tête magnétique (RF-SW), ce circuit logique déterminant le segment qui est reproduit momentanément en comparant le temps de synchronisation des apparitions du signal pilote et du signal de changement de tête, et qui engendre selon celui-ci des signaux d'indication indiquant si les données sont enregistrées dans le canal auquel correspond le segment qui est reproduit; et

– un circuit de commande pour fournir les signaux d'indication au groupe d'éléments d'affichage (16a à 16f) pour indiquer les canaux préenregistrés.

2. Appareil d'affichage selon la revendication 1, dans lequel le dispositif d'affichage (10) comprend un deuxième groupe de segments d'affichage (15a à 15f), chaque deuxième segment (15a à 15 f) correspondant à un des canaux, les deuxièmes segments (15a à 15f) étant prévus pour indiquer lequel des canaux est présentement sélectionné pour un enregistrement et une reproduction.

3. Appareil d'affichage selon la revendication 2, dans lequel le deuxième groupe de segments d'affichage (15a à 15f) est commandé par un deuxième circuit logique (23) qui reçoit un signal indiquant lequel des canaux est présentement sélectionné.

4. Appareil d'affichage selon la revendication 3, comprenant en outre un troisième circuit logique (20) reçoit des informations d'accord dans un mode récepteur vidéo de l'enregistreur et commande un segment sélectionné d'un groupe de segments d'affichage (15a à 15f) pour indiquer l'état d'accord.

# FIG.1

PCM
DECODER

SEPARATION
CKT

PILOT
SIGNAL
DETECTOR

DISPLAY

# FIG.2A

VIDEO SIGNAL
(180°)

PCM SIGNAL
(36°)

# FIG.2B

# FIG.3

# FIG.4

EP 0 206 569 B1